# EUROPÄISCHE PATENTSCHRIFT

(11) **EP 0 512 444 B1**
(45) Veröffentlichungstag und Bekanntmachung des Hinweises auf die Patenterteilung: **16.03.1994**
(21) Anmeldenummer: 92107476.1
(22) Anmeldetag: 02.05.1992
(51) Int. Cl.: B29C 69/02, B29C 67/22, B29C 49/04

(54) **Verfahren zur Herstellung eines Blasformkörpers**
Method of making of blow-moulded article
Procédé de fabrication d'un article moulé par soufflage

(30) Priorität: 10.05.1991 DE 4115236
(43) Veröffentlichungstag der Anmeldung: 11.11.1992
(73) Patentinhaber: REHAU AG + Co, 95111 Rehau (DE)
(72) Erfinder:

(56) Entgegenhaltungen:
- EP-A- 0 306 923
- DE-A- 1 629 543
- FR-A- 2 110 196
- GB-A- 2 143 465
- US-A- 4 546 899

## Beschreibung

Die Erfindung betrifft ein Verfahren zur Herstellung eines Blasformkörpers im Wege des Extrusionsblasverfahrens unter Verwendung einer geteilten Blasform, wobei der Vorformiling als schlauchförmiges Halbzeug in thermoplastischem Materialzustand in die geöffnete Blasform eingebracht, nach deren Schließen durch einen definierten Blasdruck an die inneren Konturen der Blasform angelegt und nach dem Stabilisieren als fertiger Blasformkörper aus der wiedergeöffneten Blasform entnommen wird, wobei zwischen dem Ende des Aufblasvorgangs und dem Öffnen der Blasform der hohle Innenraum des Blasformkörpers mit einer Schaummasse gefüllt wird.

Derlei Verfahren zur Herstellung von Blasformkörpern sind in vielerlei Hinsicht bekannt. Als Beispiel soll die DE-OS 25 56 186 dienen. Aus dieser Schrift ist ein Spritzblasverfahren zur Herstellung von Hohlkörpern aus thermoplastischem Kunststoff bekannt, bei dem in nacheinanderfolgenden Verfahrensschritten ein Hohlstrang aus thermoplastischem Kunststoff extrudiert und das Ende des Hohlstranges druckdicht verschlossen wird. Der in dem abgeschlossenen Hohlstrangabschnitt eingeschlossene Hohlraum wird durch Einleiten eines Druckgases innerhalb einer Hohlform aufgeblasen, bis der Hohlstrang an der Formwandung anliegt. Nach dem Erkalten wird der fertige Formkörper aus der dann geöffneten Form entnommen.

Mit solchen Verfahren nach dem Stand der Technik lassen sich beliebig geformte Hohlkörper herstellen. Zur Verbesserung der mechanischen oder thermischen Eigenschaften solcher Hohlkörper ist es bekannt, die Hohlkörper ganz oder teilweise mit Schaum zu füllen. Verwiesen wird hierzu auf die DE-OS 21 06 633. Aus dieser Schrift ist ein Verfahren zum Ausschäumen länglicher Hohlkörper bekannt, bei dem ein festes Schaumvorprodukt in Form eines Stabes von geeignetem Querschnitt der Länge nach in den Hohlraum eingeschoben wird und hierauf die Volumenvergrößerung durch Aufschäumen entweder durch Zeitablauf in Gang kommt oder durch geeignete Maßnahmen, beispielsweise Wärmezufuhr, in Gang gesetzt wird.

Im beschreibenden Teil dieser Vorveröffentlichung wird darauf hingewiesen, daß es ferner bereits bekannt war, geschlossene Hohlprofile dadurch auszuschäumen, daß ein zähflüssiger Schaumansatz in das Innere der geschlossenen Hohlprofile gebracht und dort ausgeschäumt wird. Dabei hat sich allerdings die kurze, bis zum Beginn des Aufschäumens zur Verfügung stehende Zeit als nachteilig herausgestellt. Nach den Angaben in dieser Vorveröffentlichung behilft man sich mit Sonden, welche entweder nur einen Teilbereich der geschlossenen Hohlprofile bestreichen oder welche mit einer Reihe von über den Hohlraum verteilten Bohrungen versehen sind, durch welche der zähflüssige Schaumansatz in einzelnen Portionen in den Hohlraum eingefüllt wird.

Allen bekannten Verfahren zum Ausschäumen geschlossener Hohlprofile ist der Nachteil zu eigen, daß aus prozesstechnischen Gründen zwei getrennte Verfahrensschritte unternommen werden müssen. Der erste Verfahrensschritt ist das Herstellen der Blasformteile, das mit dem Entnehmen dieser Formkörper aus der geöffneten Blasform endet.

Der zweite Verfahrensschritt betrifft das Füllen dieser Blasformteile mit Schaum. Dabei muß in der Regel das fertige Blasformteil beim Ausschäumen aus Stabilitätsgründen in eine Stützform eingelegt werden, welche verfahrensbedingt temperiert ist. Nach dem Einbringen des Schaumes und dem Ablauf einer Stabilisierungszeit kann das fertig ausgeschäumte Blasformteil dann der Stützform entnommen werden.

Aus der DE-OS 34 45 542 ist ein Verfahren zur Herstellung eines hermetisch dichten Behälters durch Blasformung bekannt, der einen sterilen inneren Abgabeauslaß aufweist. Dieser Behälter wird durch Extrudieren eines relativ warmen Kunststoff-Vorformlings hergestellt, wobei dieser Vorformling zwischen zwei beweglichen Werkzeughälften gehalten wird. Diese beweglichen Werkzeughälften weisen Innenflächen auf, die die Form des Behälters und wenigstens einen Teil des Behälterhalses definieren.

Nach dem Schließen der Werkzeughälften wird ein Fülldorn in den rohrförmigen Vorformling abgesenkt und der Behälter blasgeformt, wobei die sterile medizinische Flüssigkeit durch den Fülldorn in das Innere des blasgeformten Behälters vor dem Öffnen der Werkzeughälften eingebracht wird. Der Fülldorn wird nach dem Befüllen des Behälters mit der medizinischen Flüssigkeit zurückgezogen und der Behälter wird durch ein in den Behälterhals gepresstes Verschlußstück unter Bildung einer flüssigkeitsdichten Verbindung geschlossen.

Es handelt sich hier um ein kompliziertes und teures Verfahren, bei dem ein im Blasformverfahren hergestellter Behälter noch in der Form mit medizinischen Flüssigkeiten gefüllt und anschließend sofort steril verschlossen wird. Aus medizinischen Gründen müssen die Kosten solcher Verfahren akzeptiert werden; bei technischen Behältern sind solche Aufwendungen jedoch nicht zu tolerieren.

Die DE-A 1 629 543 offenbart ein Verfahren zur Herstellung eines Blasformkörpers durch ein Extrusionsblasverfahren unter Verwendung einer geteilten Blasform, wobei der Vorformling als Schlauch im plastischen Materialzustand in die geöffnete Blasform eingebracht, nach deren Schließen durch einen definierten Blasdruck an die inneren Konturen der Blasform angelegt und danach der innere Hohlraum unter Ausnutzung der in der Formkörperwand verbliebenen Prozeßwärme mit Schaumstoff ausgefüllt wird.

Das Befüllen bei dieser Vorveröffentlichung erfolgt allerdings mit einer schäumfähigen Mischung, welche in den Hohlraum der Blasformkörpers vor dem Öffnen der Blasform eingespritzt wird. Darüberhinaus kann eine mit einem gasförmigen Treibmittel versehene schäumfähige thermoplastifizierte Kunststoffmasse verwendet werden.

Sowohl bei der Zweikomponenten-Schäumung als auch bei der Ausschäumung mittels Treibgas ist ein hoher apparativer Aufwand erforderlich. Dieser apparative Aufwand mag bei den Gegenständen, die mit diesem Verfahren erzeugt werden, gerechtfertigt sein, da Formteile mit einer sehr dünnen Außenhaut hergestellt werden sollen. Unter diesen erschwerten Umständen muß eine vollkommene Ausfüllung der Hülle durch den Schaumstoff erfolgen, wobei die zu erzeugende Schaummenge durch die eingesetzten Anteile der Polyurethanschaumkomponenten Polyol und Isocyanat einerseits sowie durch die genaue Einstellung des Schußgewichts bei der Verwendung von gasfähigen Treibmitteln in der Spritzgußmaschine andererseits exakt eingestellt werden können.

Die Erfindung hat sich die Aufgabe gestellt, die zum Stand der Technik geschilderten Nachteile zu vermeiden und ein Verfahren zur mechanischen oder thermischen Eigenschaftsverbesserung von blasgeformten Hohlkörpern anzugeben, das sich einfach und kostengünstig durchführen läßt. Erfindungsgemäß wird dazu vorgeschlagen, daß zur Füllung des Blaskörpers vorgeformte Schaumstoffpartikel verwendet werden.

Die Erfindung macht sich den Vorteil zunutze, daß beim Extrusionsblasverfahren das ausgeformte Blasteil mit seinem inneren Hohlraum vor der Entnahme aus der geteilten Blasform mit seinen Außenkonturen in vollem Umfang an der Kontur des Blasformwerkzeuges anliegt. Prozessbedingt besitzt die Wandung des Blasteils in dieser Phase je nach verarbeitetem Material eine Temperatur zwischen ca. 100° und 180° C.

Während beim herkömmlichen Extrusionsblasverfahren nach diesen Prozeßschritten anschließend die Phase des Stabilisierens und Kühlens sowie der Entnahme des Blasformkörpers aus dem geöffneten Werkzeug erfolgt, werden in dieser Phase für das erfindungsgemäße Verfahren zwei wesentliche Bedingungen für das Befüllen des Hohlraumes des Blasformkörpers mit Schaumpartikeln geboten:
1. Das noch geschlossene Blaswerkzeug wirkt als Stützwerkzeug gegen den Einfülldruck.
2. Der Blasformkörper ist verfahrensbedingt in dieser Situation temperiert.

Es entfällt also das beim Stand der Technik beim nachträglichen Befüllen mit Schaumpartikeln erforderliche Stützwerkzeug sowie das dafür erforderliche erneute Temperieren des Blasformteils.

Die erfindungsgemäß eingebrachten vorgeformten Schaumstoffpartikeln gehen bei der Berührung der Innenwand des Blasformkörpers mit dieser eine feste Verbindung ein.

Bei der Befüllung des Hohlraumes mit Schaumstoffpartikeln sollte die restliche Prozesswärme der Blasformkörperwand maximal 120° betragen. Darüber hinausgehende Temperaturen könnten die Schaumstoffpartikel beschädigen. Vesuche haben gezeigt, daß bis zu der angegebenen Maximaltemperatur von 120°C EPS- oder PP-Partikelschaum optimale Ergebnisse gebracht haben.

Das erfindungsgemäße Befüllen des Blasformkörpers erfolgt unter einem zur Stabilisierung des Blasteils erforderlichen Innendruck von 2-8 bar. Der Fülldruck, mit dem der Partikelschaum in den Innenraum des Blasformkörpers eingedrückt werden, muß also diesen Stabilisierungsdruck übersteigen.

Die besonderen Vorteile des erfindungsgemäßen Verfahrens werden damit verdeutlicht, daß bei der Verwendung von Partikelschaum die Füllung des Blasformkörpers nach einer kurzen Stabilisierungsphase, die je nach Wanddicke der Blasformkörpers zwischen 0,5 und 3 Minuten beträgt, das gefüllte Blasteil aus der dann geöffneten Form entnommen werden kann.

Die nicht mit der Formkörperwand direkt verbundenen Schaumstoffpartikel können bei der Verwendung von Partikelschaum durch zusätzliches Einblasen eines feuchten Fluids in Form eines Sinterprozesses miteinander verbunden werden, wobei auch hier die in der Behälterwand noch vorhandene Prozesswärme ausgenutzt wird.

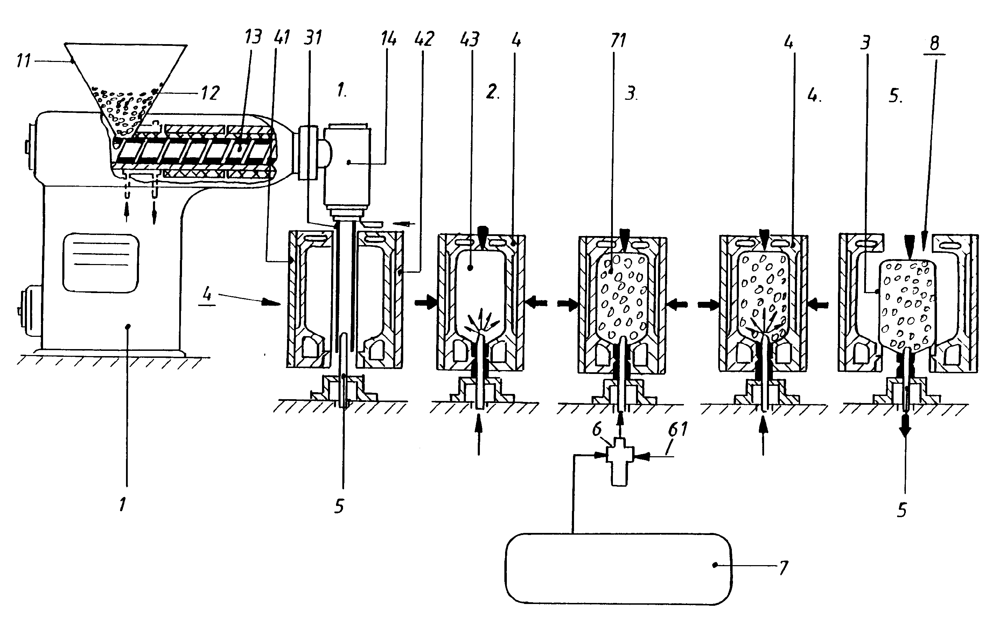

In der Zeichnung ist der schematische Ablauf des erfindungsgemäßen Verfahrens zur Herstellung eines Blasformkörpers dargestellt. Gezeigt ist ein Extruder 1 mit Einfülltrichter 11 für das polymere Material 12 aus dem die Blasformkörperwand 3 gebildet ist. Das polymere Material 12 wird in den Fördergang einer Extrusionsschnecke 13 eingezogen, dort plastifiziert und über das Werkzeug 14 als schlauchförmiges Halbzeug 31 ausgetragen.

Das schlauchförmige Halbzeug 31 wird in die geteilte Blasform 4 mit den Blasformhälften 41, 42 eingefahren. Sobald das Halbzeug 31 den Blasdorn 5 an dessen Spitze übergriffen hat, werden die Blasformhälften 41, 42 geschlossen und die Blasform 4 vom Extruder 1 entfernt. Es erfolgt unmittelbar anschließend die Einführung von Blasluft in das Innere des Halbzeugs 31 und das Anlegen des Vorformlings an die inneren Konturen der Blasform 4.

Im nächsten Verfahrensschritt wird der Blasdorn von der Druckluftquelle abgekoppelt und an einen Förderinjektor 6 angeschlossen, der mit einem mit vorgeschäumten Partikelschaum gefüllten Silo 7 verbunden ist. Der Förderinjektor 6 ist mit einer Luftquelle 61 für das Eintragen der Förderluft verbunden. Über den Förderinjektor 6 wird der Partikelschaum 71 aus dem Silo 7 in den hohlen Innenraum 43 des Blasformkörpers gefördert.

Danach wird die Blasform 4 vom Förderinjektor 6 abgekoppelt und in einer Stabilisierungsphase zur Vorbereitung der Entnahme des gefüllten Blasformkörpers abgekühlt. Vor der endgültigen Abkühlung kann im Bedarfsfall das Versintern der Schaumstoffpartikel untereinander mittels Einblasen von feuchter Luft erfolgen.

In der letzten Schemaskizze sind die Blasformhälften 41, 42 wieder geöffnet und der fertige, mit Partikelschaum gefüllte Blasformkörper 8 kann vom Blasdorn 5 abgezogen und aus der Form entnommen werden.

Die Befüllung des hohlen Innenraums des Blasformkörpers erfolgt bei der Schemaskizze und deren Beschreibung über den Blasdorn 5. Diese Befüllungsform bietet sich dann an, wenn es sich um Blasformkörper mit größerem Volumen handelt. Kleinvolumige Blasformkörper, aber auch solche mit größerem Volumen, können mit bekannten Injektionsvorrichtungen erfindungsgemäß befüllt werden.

## Patentansprüche

1. Verfahren zur Herstellung eines Blasformkörpers (8) im Wege des Extrusionsblasverfahrens unter Verwendung einer geteilten Blasform (4), wobei der Vorformling als schlauchförmiges Halbzeug (31) in thermoplastischem Materialzustand in die geöffnete Blasform (4) eingebracht, nach deren Schließen durch einen definierten Blasdruck an die inneren Konturen der Blasform (4) angelegt und nach dem Stabilisieren als fertiger Blasformkörper (8) aus der wiedergeöffneten Blasform (4) entnommen wird, wobei zwischen dem Ende des Aufblasvorgangs und dem Öffnen der Blasform (4) der hohle Innenraum des Blasformkörpers (8) mit einer Schaummasse gefüllt wird, dadurch gekennzeichnet, daß zur Füllung des Blasformkörpers (8) vorgeformte Schaumstoffpartikel (71) verwendet werden.

2. Verfahren nach Anspruch 1, dadurch gekennzeichnet, daß die vorgeformten Schaumstoffpartikel (71) bei der Berührung der Innenwand des Blasformkörpers (8) mit dieser eine feste Verbindung eingehen.

3. Verfahren nach Anspruch 1, dadurch gekennzeichnet, daß während der Befüllung des Blasformkörpers (8) der Blasdruck von bis zu 8 bar aufrechterhalten wird.

4. Verfahren nach Ansprüchen 1 und 2, dadurch gekennzeichnet, daß die nicht mit der Innenwand des Blasformkörpers (8) direkt verbundenen Schaumstoffpartikel (71) durch zusätzliches Einblasen eines feuchten Fluids in Form eines Sinterprozesses miteinander verbunden werden.

## Claims

1. Process for the production of a blow moulded body (8) in the manner of the extrusion blow-moulding process, which makes use of a divided blowing mould (4), whereby the preform, consisting of a hose-shaped semi-finished product (31), is introduced in thermoplastic condition into the opened blowing mould (4), which is then closed and a predetermined air pressure then applied to the inner contours of the blowing mould (4); whereby the blow-moulded body (8), after stabilization, is removed from the re-opened blowing mould (4); and whereby, between the end of the blowing process and the opening of the blowing mould (4), the hollow interior of the blow-moulded body (8) is filled with a foam compound, thereby characterized, in that to fill the blow-moulded body (8), preformed foam particles (71) are used.

2. Process in accordance with claim 1, thereby characterized, in that the preformed foam particles (71) become firmly attached to the interior wall of the blow-moulded body (8) on contact.

3. Process in accordance with claim 1, thereby characterized, in that, during the filling of the blow-moulded body (8), an air pressure of up to 8 bar is maintained.

4. Process in accordance with claims 1 and 2, thereby characterized, in that those foam particles (71) not directly attached to the interior wall of the blow-moulded body (8) are bonded together in the manner of a sintering process by the additional injection under pressure of a moist fluid.

## Revendications

1. Procédé de fabrication d'une pièce moulée par soufflage (8) selon le procédé d'extrusion-soufflage, utilisant un moule de soufflage (4) en deux parties; la paraison est introduite dans le moule de soufflage ouvert sous forme de produit semi-fini tubulaire, elle est plaquée contre les contours internes du moule (4) par une pression de soufflage définie, elle est extraite du moule de soufflage (4) réouvert sous forme de pièce finie moulée par soufflage (8), le volume intérieur creux de la piéce moulée par soufflage est rempli d'une masse de mousse entre la fin du processus de soufflage et l'ouverture du moule de soufflage (4); le procédé est caractérisé par le fait que des particules de mousse (71) préformées sont utilisées pour le remplissage de la pièce moulée par soufflage.

2. Procédé selon la revendication 1, caractérisé par le fait que lors du contact avec la paroi interne de la pièce moulée par soufflage (8), les particules de mousse préformées (71) se lient solidement à elle.

3. Procédé selon la revendication 1, caractérisé par le fait que pendant le remplissage de la pièce moulée par soufflage (8), on maintient une pression de soufflage jusqu'à 8 bars.

4. Procédé selon les revendications 1 et 2, caractérisé par le fait que les particules de mousse (71) qui ne sont pas directement liées à la paroi interne de la pièce moulée par soufflage (8), sont liées entre elles par insufflage supplémentaire d'un fluide humide selon un procédé de frittage.
